**Europäisches Patentamt**

**European Patent Office**

**Office européen des brevets**

(19)

(11) Numéro de publication : **0 389 309 B1**

(12) **FASCICULE DE BREVET EUROPEEN**

(45) Date de publication du fascicule du brevet :
27.05.92 Bulletin 92/22

(51) Int. Cl.⁵ : **F16L 3/10**

(21) Numéro de dépôt : **90400383.7**

(22) Date de dépôt : **13.02.90**

(54) **Collier pour la fixation de tuyauteries, de tubes et de câbles.**

(30) Priorité : **22.02.89 FR 8902282**

(43) Date de publication de la demande :
**26.09.90 Bulletin 90/39**

(45) Mention de la délivrance du brevet :
**27.05.92 Bulletin 92/22**

(84) Etats contractants désignés :
**BE ES NL**

(56) Documents cités :
**EP-A- 0 225 516
DE-U- 1 970 303
DE-U- 8 503 846
FR-A- 2 500 571
FR-A- 2 533 659**

(73) Titulaire : **ATELIERS ELECTRIQUES ET
METALLURGIQUES DU LOIRET
Rue de Chenevières
F-45130 Meung-Sur-Loire (FR)**

(72) Inventeur : **Cosson, Raymond
1 rue de la Grouache
F-45130 La Baule (FR)**

(74) Mandataire : **Chevallier, Robert Marie Georges
et al
Cabinet BOETTCHER 23, rue La Boétie
F-75008 Paris (FR)**

EP 0 389 309 B1

# Description

L'invention a pour objet un collier servant à la fixation le long d'une paroi, de tuyauteries ou de tubes ou de câbles ou, encore, d'autres objets analogues.

Les colliers destinés à cet usage comprennent des demi-colliers dont l'un est pourvu d'un moyen d'ancrage dans la paroi et dont l'autre vient s'appliquer sur le premier pour la tenue entre eux de l'objet à fixer.

Les deux demi-colliers ont chacun deux pattes qui s'appliquent l'une contre l'autre pour permettre leur assemblage par vis et écrou à la suite de l'engagement des vis dans des trous prévus dans les pattes.

Ces colliers ont les deux inconvénients suivants. D'une part les vis sont susceptibles d'être perdues, d'autre part quand l'objet à fixer est placé dans le demi-collier ancré au mur, il ne se produit pas toujours un alignement correct des trous des deux demi-colliers pour que les vis puissent y être introduites sans difficulté et engagées avec les écrous. Cette difficulté accroît encore le risque de la chute d'une vis pendant la tentative de mise en place de celle-ci pour l'assemblage des deux demi-colliers.

Diverses mesures ont été proposées pour remédier à cette situation. Par exemple dans le document FR-A-2 533 659 il est envisagé d'une part d'utiliser des vis rendues imperdables au moyen d'une gorge réalisée sur la tige de la vis juste en-dessous de sa tête, d'autre part de prévoir un trou oblong au lieu d'un trou cylindrique pour y faire tenir la vis en lui donnant ainsi une liberté de débattement permettant de compenser le mauvais alignement des demi-colliers.

L'invention a pour but principal d'apporter une autre solution extrêmement économique afin d'éviter les inconvénients mentionnés plus haut.

Dans un collier de fixation conforme à l'invention, les pattes d'un premier demi-collier sont munies chacune d'un écrou qui leur est fixé en correspondance avec le trou de passage et l'ouverture de passage d'une vis des pattes du second demi-collier est limitée par deux languettes découpées en regard l'une de l'autre avec leurs bases éloignées l'une de l'autre et leurs extrémités libres proches l'une de l'autre, ces languettes s'étendant obliquement à l'opposé du premier demi-collier et tenant entre elles la partie non filetée d'une vis du type à filetage refoulé à froid.

Les extrémités libres qui se font face, de l'une et de l'autre languette, peuvent être terminées par des boris rectilignes parallèles, mais il est possible aussi de prévoir ces bords avec un profil demi-circulaire en relation étroite avec le diamètre de la vis.

On donnera maintenant une description d'un exemple de réalisation de l'invention. On se reportera aux dessins annexés dans lesquels :
– la figure 1 est une vue générale en coupe par un plan passant par les trous des vis de serrage d'un collier de fixation conforme à l'invention,
– la figue 2 est une vue agrandie de détail montrant les deux languettes d'une patte d'un demi-collier, la vis étant omise,
– les figures 3 et 4 sont des vues de côté avec la vis représentée en coupe de deux languettes respectivement à bords rectilignes et à bords incurvés à leurs extrémités libres.

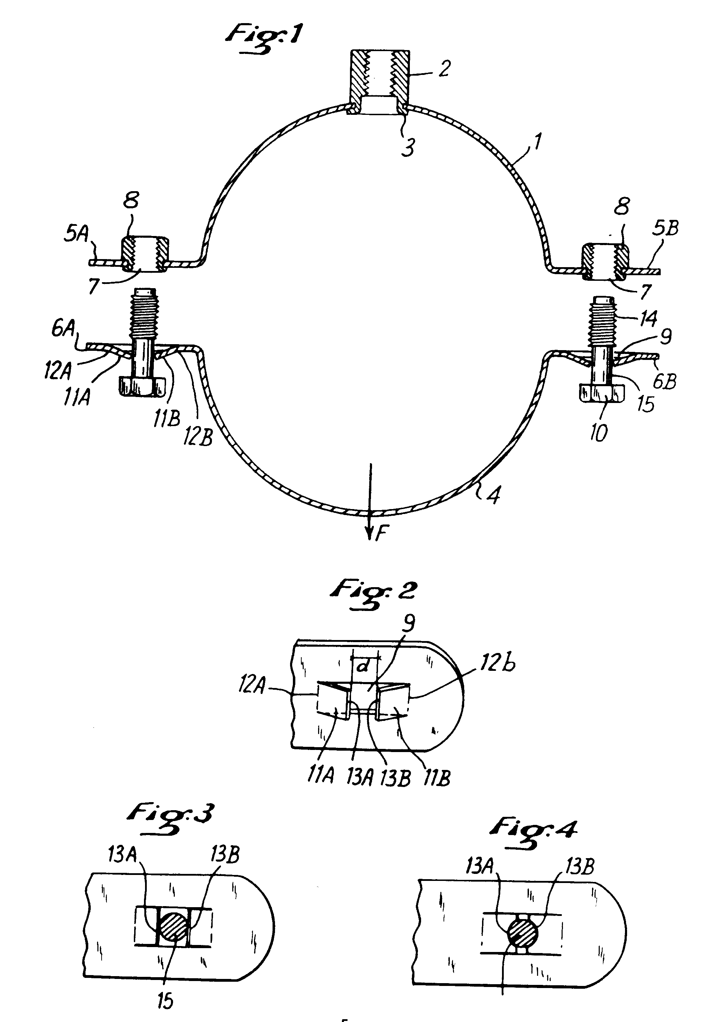

Le coilfer de la figure 1 est classique dans son ensemble, il n'est pas utile de le décrire en détail. il est du type dans lequel l'un des demi-colliers 1 est pourvu d'un manchon fileté 2 qui est tenu en place par sertissage en 3, de l'une de ses extrémités dans un trou correspondant prévu sur ce demi-collier. Ce manchon fileté 2 sert à la fixation du demi-collier 1 à une paroi. D'autres moyens d'ancrage à une paroi peuvent être adaptés en variante.

Le collier comprend un second demi-collier 4 et les deux demi-colliers 1,4 ont chacun des pattes 5A,5B et 6A,6B respectivement qui sont opposées deux à deux dans des plans parallèles pour permettre l'assemblage de ces deux demi-colliers.

Sur chacune des pattes 5A,5B du demi-collier 1 il est prévu un trou de passage 7 dans lequel est sertie une extrémité d'un écrou 8, de la même façon que le manchon 2. Ainsi ces écrous 8 sont fixés et inséparables du demi-collier 1 destiné à être ancré à une paroi. Bien entendu, ils pourraient être fixés par d'autres moyens par exemple par soudure.

Sur chacune des pattes 6A,6B du demi-collier 4, il est prévu une ouverture de passage 9, en correspondance avec les écrous 8, pour le passage d'une vis 10. Les ouvertures 9 sont réalisées par la découpe de deux languettes 11A, 11B dont les bases 12A,12B non découpées sont éloignées l'une de l'autre et dont les extrémités libres 13A,13B sont proches l'une de l'autre. Les deux languettes 11A,11B sont donc en regard l'une de l'autre, dirigées l'une vers l'autre, avec leurs extrémités libres 13A,13B opposées l'une à l'autre. Elles ont une longueur entre leur base et leur extrémité libre déterminée en fonction de la grosseur de la vis 10.

Les languettes 11A,11B sont repoussées vers l'extérieur, à l'opposé du premier demi-collier 1; plus elles sont poussées obliquement vers l'extérieur plus la distance $\underline{d}$ entre leurs extrémités libres 13A,13B (figure 2) devient importante, inversement plus elles sont poussées vers leur position plus leurs extrémités libres se rapprochent.

On sait qu'il est courant de fabriquer des vis telles que les vis 10 par des opérations réalisées à froid sur un fil métallique de diamètre convenable. La tête est réalisée par une opération de frappe à froid et le filetage par une opération de roulage à froid au cours de laquelle le filetage est formé par refoulement du métal. Il en résulte que le diamètre sur filets de la partie filetée 14 est supérieur au diamètre de la partie non filetée 15.

Chaque vis 10 est introduite entre les languettes opposées 11A,11B et elle est tenue entre les bords libres 13A,13B opposées de ces languettes par sa partie non filetée 15, la distance $\underline{d}$ entre ces bords opposés étant sensiblement égale au diamètre de la partie non filetée 15 et inférieure au diamètre sur filets de la partie filetée 14.

De cette façon chaque vis 10 est tenue entre les languettes 11A,11B; elle peut être séparée du demi-collier 4 par un effort de traction assez grand pour faire glisser la partie filetée 14 entre ces languettes, mais un effort de traction de ce genre est peu susceptible de se produire accidentellement pendant les manipulations habituelles des demi-colliers.

On notera que les vis 10 sont d'un prix de revient bas et qu'elles ne subissent aucune opération spéciale en vue de leur emploi avec le collier de l'invention.

Les languettes 11A,11B sont réalisées par une opération de découpage et écartées suffisamment pour permettre une mise en place facile de la vis 10. Une simple pression de la tête de la vis 10 contre les languettes 11A, 11B a pour effet de rapprocher celles-ci et de les serrer sur la partie non filetée 15. Ces opérations sont, aussi, simples et économiques.

Les figures 3 et 4 montrent que les bords 13A,13B des extrémités libres des languettes 11A,11B peuvent, pendant l'opération de découpage de ces dernières, être prévus pour rester rectilignes et parallèles (figure 3) ou pour être circulaires sensiblement au diamètre de la partie non filetée 15 de la vis (figure 4).

Dans le second cas, les bords libres 13A,13B tiennent mieux et guident mieux entre eux la vis 10 mais lui laissent moins de liberté de débattement. Dans le premier cas, les bords libres 13A,13B sont tangents à la partie lisse non filetée 15 de la vis; ils laissent à cette dernière plus de liberté de débattement et d'orientations diverses. Cette possibilité facilite l'engagement de la vis 10 avec l'écrou 8 correspondant du demi-collier 1 quand les deux demi-colliers ne sont pas parfaitement en regard l'un de l'autre, comme il arrive souvent, au moment de leur assemblage.

Il est évident qu'un tracé intermédiaire entre ceux des figures 3 et 4, c'est-à-dire une découpe en arc de cercle d'extension limitée, peut être adopté si on le juge souhaitable.

On remarquera encore que lorsqu'une force d'arrachement est appliquée au demi-collier 4, comme indiqué par une flèche F sur la figure 1, cette force a pour résultat que les languettes 11A,11B sont appliquées plus fortement entre la face inférieure de la tête de la vis 10, dans un sens qui tend à les rapprocher et à les serrer davantage contre la partie non filetée 15.

## Revendications

1. Collier de fixation de tuyauteries, de tubes, de câbles, composé de deux demi-colliers (1,4) ayant chacun des pattes (5A, 5B - 6A, 6B) pour leur assemblage à l'aide de vis (10) et d'écrous (8), les pattes (5A, 5B) d'un premier demi-collier (1) ayant chacune un trou de passage (7) et les pattes (6A, 6B) du second ayant chacune une ouverture (9) de passage de vis caractérisé en ce que le trou (7) de passage des pattes (5A, 5B) du premier demi-collier (1) possède un écrou (8) tandis que chaque ouverture de passage (9) du second demi-collier (4) est limitée par deux languettes (12A, 12B) découpées en regard l'une de l'autre avec leurs extrémités libres (13A, 13B) proches l'une de l'autre, ces languettes (12A, 12B) s'étendant obliquement à l'opposé du premier demi-collier (1) et tenant entre elles la partie lisse non filetée (15) d'une vis (10) du type à filetage refoulé à froid.

2. Collier selon la revendication 1, caractérisé en ce que les bords (13A, 13B) des extrémités libres des languettes (11A, 11B) sont rectilignes et parallèles.

3. Collier selon la revendication 1, caractérisé en ce que les bords (13A, 13B) des extrémités libres des languettes (11A, 11B) sont incurvés.

4. Collier selon la revendication 3, caractérisé en ce que les bords (13A, 13B) sont chacun demi-circulaire sensiblement en correspondance avec le diamètre de la partie lisse non filetée (15) de la vis (10).

## Patentansprüche

1. Schelle zum Befestigen von Rohrleitungen, Rohren, Kabeln, bestehend aus zwei Halbschellen (1, 4), die jeweils Lappen (5A, 5B - 6A, 6B) für ihre Verbindung mit Hilfe von Schrauben (10) und Muttern (8) haben, wobei die Lappen (5A, 5B) einer ersten Halbschelle (1) jeweils ein Durchtrittsloch (7) und die Lappen (6A, 6B) der zweiten Halbschelle jeweils eine Schraubendurchtrittsöffnung (9) haben, dadurch **gekennzeichnet**, daß das Durchtrittsloch (7) der Lappen (5A, 5B) der ersten Halbschelle (1) eine Mutter (8) besitzt, während jede Durchtrittsöffnung (9) der zweiten Halbschelle (4) durch zwei abgeschnittene Zungen (12A, 12B) begrenzt ist, die mit ihren einander nahen freien Enden (13A, 13B) einander zugewandt sind, wobei die Zungen (12A, 12B) schräg von der ersten Halbschelle (1) weggerichtet sind und zwischen sich den glatten, gewindelosen Abschnitt (15) einer Schraube (10) des Typs mit kaltgestauchtem Gewinde halten.

2. Schelle nach Anspruch 1, dadurch **gekennzeichnet**, daß die Ränder (13A, 13B) der freien Enden der Zungen (11A, 11B) geradlinig und parallel zueinander sind.

3. Schelle nach Anspruch 1, dadurch **gekenn-**

zeichnet, daß die Ränder (13A, 13B) der freien Enden der Zungen (11A, 11B) gekrümmt sind.

4. Schelle nach Anspruch 3, dadurch gekennzeichnet, daß die Ränder (13A, 13B) jeweils im wesentlichen halbkreisförmig entsprechend dem Durchmesser des glatten gewindefreien Abschnittes (15) der Schraube (10) sind.

## Claims

1. A clamp for fixing pipes, tubes and cables, comprising two clamp halves (1, 4) each having lugs (5A, 5B - 6A, 6B) for assembly thereof by means of screws (10) and nuts (8), the lugs (5A, 5B) of a first clamp half (1) each having a through hole (7) and the lugs (6A, 6B) of the second each having a screw receiving opening (9), characterised in that the through hole (7) in the lugs (5A, 5B) of the first clamp half (1) has a nut (8) while each receiving opening (9) in the second clamp half (4) is limited by two tongue portions (12A, 12B) which are cut out in mutually facing relationship with their free ends (13A, 13B) adjacent each other, said tongue port ions (12A, 12B) extending inclinedly in opposite relationship to the first clamp half (1) and holding between them the smooth non-screwthreaded portion (15) of a screw (10) of the type having a cold-rolled screwthread.

2. A clamp according to claim 1 characterised in that the edges (13A, 13B) of the free ends of the tongue portions (11A, 11B) are straight and parallel.

3. A clamp according to claim 1 characterised in that the edges (13A, 13B) of the free ends of the tongue portions (11A, 11B) are curved.

4. A clamp according to claim 3 characterised in that the edges (13A, 13B) are each semi-circular substantially corresponding to the diameter of the smooth non-screwthreaded portion (15) of the screw (10).

Fig.1

Fig.2

Fig.3

Fig.4